# EUROPEAN PATENT APPLICATION

(11) **EP 1 712 342 A1**
(43) Date of publication of application: **18.10.2006**
(21) Application number: 05709701.6
(22) Date of filing: 03.02.2005
(51) Int. Cl.: B29C 65/08, B29C 65/56

(54) **ULTRASONIC WELDING STRUCTURE AND ULTRASONIC WELDING METHOD**

(30) Priority: 03.02.2004 JP 2004027410; 23.03.2004 JP 2004084532
(71) Applicant: NHK SPRING CO., LTD., Yokohama-shi, Kanagawa 236-0004 (JP)
(72) Inventor: TOMINAGA, Jun, Yokohama-shi, Kanagawa 2360004 (JP); SHIGEMATSU, Ryohei, Yokohama-shi, Kanagawa 2360004 (JP); FURUKAWA, Kazuo, Yokohama-shi, Kanagawa 2360004 (JP)
(74) Representative: HOFFMANN EITLE
(86) International application number: PCT/JP2005/001608
(87) International publication number: WO 2005/075178

(57) **Abstract**

An ultrasonic welding structure for pressing a horn (3) against a columnar heating target consisting of a resin (10), applying a high frequency vibration from the hone (3) to the heating target, and thereby fusion-bonding the heating target to a predetermined bonding target, wherein the bonding target includes an insertion hole for inserting the heating target, and the insertion hole of the bonding target includes a notch formed in an inner edge of the insertion hole on a side facing the resonator. The notch of the insertion hole can be formed to serve as an acceptance unit that accepts the heating target in a molten state. Alternatively, the notch of the insertion hole can be formed to serve as a stress relaxing unit that relaxes a stress generated within the bonding target by contacting with the inner edge of the insertion hole.

## Description

### TECHNICAL FIELD

The present invention relates to an ultrasonic welding structure and an ultrasonic welding method for performing welding with vibrational energy generated by an ultrasonic wave, and more particularly, to an ultrasonic welding structure and an ultrasonic welding method for bonding a columnar heating target formed with a resin to a predetermined bonding target by pressing a resonator against the heating target and applying a high frequency vibration from the resonator to the heating target.

### BACKGROUND ART

Conventionally, ultrasonic welding has been performed for heating a heating target consisting of a thermoplastic resin using a vibrational energy generated by an ultrasonic wave and thereby fixedly bonding the heating target to a bonding target consisting of the other resin, a metal or the like. In this ultrasonic welding, a resonator called "horn" is pressed against the heating target, and a high frequency mechanical vibration is applied to the heating target from this resonator. A temperature of the heating target applied with this mechanical vibration is raised by conversion of the vibrational energy into a frictional heat within the heating target. The heating target is thereby molten and fixedly bonded to the bonding target (see, for example, Patent Document 1).

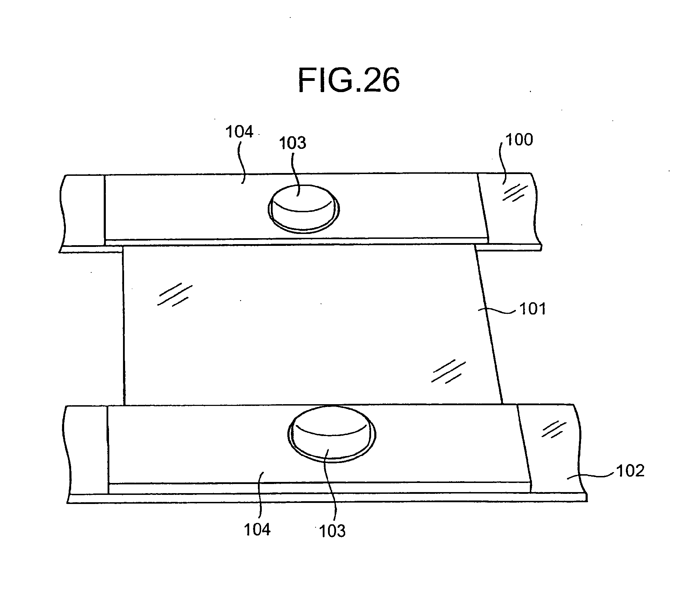

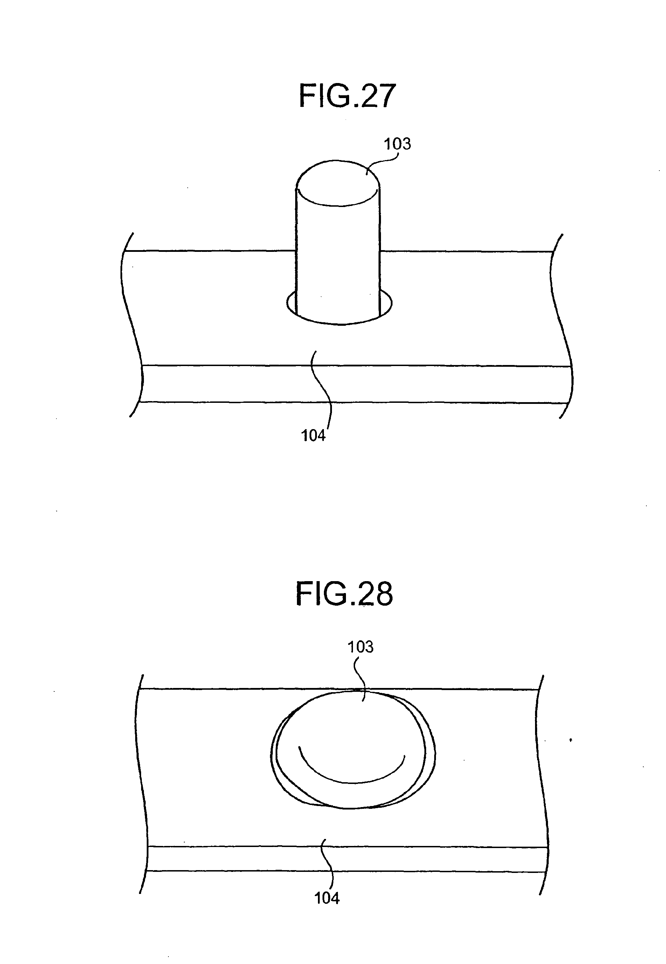

This ultrasonic welding is widely used in various industrial fields. For instance, the ultrasonic welding is applied for mutually fixing constituent members of an actuator employed in an automobile. Fig. 26 is a perspective view of an example of using the ultrasonic welding for the actuator, Fig. 27 is an enlarged perspective view of a welded portion before the welding, and Fig. 28 is an enlarged perspective view of the welded portion after welding. As shown in Figs. 26 to 28, a movable unit 100 for scanning is fixed to a fixed unit 102 through a plate spring 101.

The movable unit 100 and the fixed unit 102 are provided with a columnar resin (boss) 103 as a heating target. In addition, the plate spring 101 is put between fixing resins 104, thereby constituting bonding targets on respective end of the plate spring 101. An insertion hole is formed in each of the fixing resins 104 for inserting the heating target. As shown in Fig. 27, after the resin 103 is inserted into the insertion holes, ends of the resin 103 are molten by the ultrasonic welding. In addition, as shown in Fig. 28, the resin 103 is fixedly attached to the fixing resins 104.

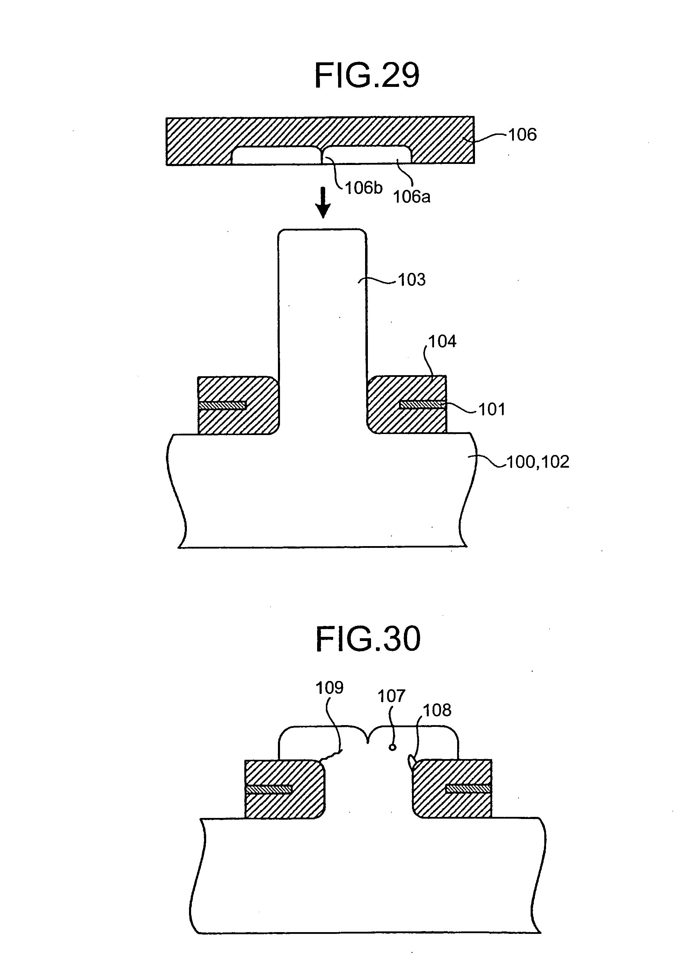

Fig. 29 is a longitudinal sectional view of surroundings of a welded portion before welding, and Fig. 30 is a longitudinal sectional view of the surroundings of the welded portion after welding. As shown in Fig. 29, a concave portion 106a that contacts with the resin 103 is provided on a bottom of a hone 106, and a protrusion 106b that protrudes toward the resin 103 is formed in the concave portion 106a. If the entire horn 106 is pressed against the resin 103 before the resin 103 is softened, cracks and the like are unfavorably formed in the resin 103 due to the vibrational energy from the horn 106. To prevent occurrence of cracking and the like, only the protrusion 106b is pressed first against the resin 103 to soften only part of the resin, and the remainder of the resin 103 is then gradually softened.

As the resin 103 that constitutes the heating target, an amorphous resin is normally used for the following reason. Since the amorphous resin has an irregular molecular array and a wide softening temperature range, the resin 103 is gradually softened and molten with excellent ultrasonic conductivity.

Patent Document 1: Japanese Patent Application Laid-open No. 2000-79638

### DISCLOSURE OF INVENTION

### PROBLEM TO BE SOLVED BY THE INVENTION

However, the conventional ultrasonic welding technique has various problems. Namely, after the ultrasonic welding, a void (bubble), a ridge (interfacial peeling between a welded portion and a non-welded portion) or a crack often occurs to the resin 103 that is the heating target. As shown in the longitudinal sectional view of Fig. 30, for example, a void 107, a ridge 108, and a crack 109 occur to the resin 103 after the welding.

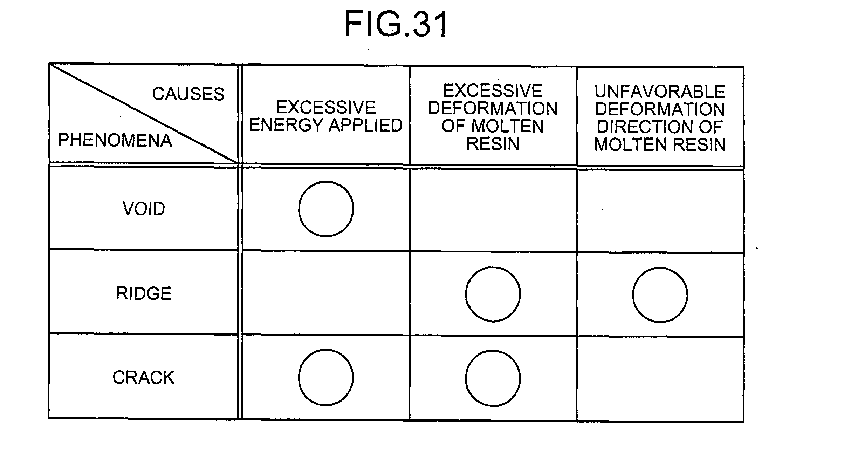

Main causes for the void 107 and the like are illuminated to some extent. Fig. 31 is a table of a correlation between each phenomenon that can possibly occur as a result of the conventional ultrasonic welding and a main cause for the phenomenon. As shown in Fig. 31, it is considered that the void 107 is caused by an excessive high vibrational energy applied to the resin 103. In this case, only a part of the resin 103 is molten and deformed, with the result that the air is introduced in between the molten and deformed part and the other non-molten part of the resin 103 or that the air contained within the resin 103 is changed into bubbles.

Further, a cause for the ridge 108 is considered as follows. Since a deformation of the molten resin 103 is excessively large, a surface area change appears as a wrinkle during deformation of the resin 103. Alternatively, since the resin 103 is molten in an unfavorable deformation direction, the molten resin 103 contacts with the non-molten resin 103 to thereby form a boundary therebetween.

Moreover, a cause for the crack 109 is considered as follows. Since the vibrational energy applied to the resin 103 is excessively high or the deformation of the molten resin 103 is excessively large, the resin 103 is minimally destroyed in a portion, e.g., a proximal portion of the resin 103, which portion is susceptible to stress concentration.

Although the main causes for the respective problems are identified to some extent, no specific structure and method for ultrasonic welding for eliminating those main causes have been proposed so far.

At a location severe in vibration, humidity, and temperature environment such as a vehicle part, these problems can possibly occur conspicuously. Improvements in the ultrasonic welding structure and the ultrasonic welding method have been, therefore, desired.

The present invention has been achieved to solve these problems. It is an object of the present invention to provide an ultrasonic welding structure and an ultrasonic welding method capable of improving a durability of a welded part by reducing occurrence of a void, a ridge, or a crack to the welded part.

### MEANS FOR SOLVING PROBLEM

To solve the above problems and to achieve the object, an ultrasonic welding structure according to one aspect of the present invention is for bonding a columnar heating target formed with a resin to a predetermined bonding target by pressing a resonator against the heating target and applying a high frequency vibration from the resonator to the heating target. The bonding target includes an insertion hole for inserting the heating target. The insertion hole of the bonding target includes a notch formed on an inner edge of the insertion hole on a side facing the resonator.

According to the present invention, the notch of the insertion hole serves as an acceptance unit that accepts the heating target in a molten state.

According to the present invention, the notch of the insertion hole serves as a stress relaxing unit that relaxes a stress generated within the bonding target due to a contact with the inner edge of the insertion hole.

An ultrasonic welding structure according to another aspect of the present invention is for bonding a columnar heating target formed with a resin to a predetermined bonding target by pressing a resonator against the heating target and applying a high frequency vibration from the resonator to the heating target. A surface of the resonator on which the resonator contacts with the heating target is formed in a substantially flat shape. The heating target includes a resonator connecting unit that is formed to protrude toward the resonator.

An ultrasonic welding structure according to still another aspect of the present invention is for bonding a columnar heating target formed with a resin to a predetermined bonding target by pressing a resonator against the heating target and applying a high frequency vibration from the resonator to the heating target. The resonator includes a protruding portion that protrudes from a bottom of the resonator toward the heating target. The protruding portion of the resonator is formed in a substantially semispherical or conical shape.

An ultrasonic welding structure according to still another aspect of the present invention is for bonding a columnar heating target formed with a resin to a predetermined bonding target by pressing a resonator against the heating target and applying a high frequency vibration from the resonator to the heating target. The resonator includes a protruding portion that protrudes from a bottom of the resonator toward the heating target. An inclined surface from the bottom of the resonator to a base of the protruding portion is formed on the resonator.

An ultrasonic welding structure according to still another aspect of the present invention is for bonding a columnar heating target formed with a resin to a predetermined bonding target by pressing a resonator against the heating target and applying a high frequency vibration from the resonator to the heating target. The resonator includes a protruding portion that protrudes from a bottom of the resonator toward the heating target. The heating target includes a resonator acceptance unit formed at least in a concave shape with relative to the resonator.

According to the present invention, the protruding portion of the resonator is formed in a substantially semispherical shape. The resonator acceptance unit of the heating target is formed in a substantially conical shape with a diameter large enough to include the protruding portion formed in the substantially semispherical shape.

According to the present invention, the resonator acceptance unit is an elongated hole formed along a direction of pressing the resonator.

According to the present invention, the resonator acceptance unit is a penetrating hole formed along a direction of pressing the resonator to reach a bottom of the heating target.

According to the present invention, a notch is provided in an upper edge of the resonator acceptance unit.

An ultrasonic welding structure according to still another aspect of the present invention is for bonding a columnar heating target formed with a resin to a predetermined bonding target by pressing a resonator against the heating target and applying a high frequency vibration from the resonator to the heating target. The heating target includes a large-diameter portion located on a side of a base of the heating target; and a small-diameter portion located on a side of the resonator relative to the large-diameter portion, with a smaller diameter than a diameter of the large-diameter portion.

According to the present invention, the bonding target includes an insertion hole for inserting the heating target. A boundary between the large-diameter portion and the small-diameter portion of the heating target is arranged downward of an upper surface of the bonding target in a state in which the heating target is inserted into the insertion hole.

An ultrasonic welding structure according to still another aspect of the present invention is for bonding a columnar heating target formed with a resin to a predetermined bonding target by pressing a resonator against the heating target and applying a high frequency vibration from the resonator to the heating target. The resonator includes a protruding portion that protrudes from a bottom of the resonator toward the heating target, the protruding portion being formed in a substantially semispherical or conical shape; and an inclined surface formed from the bottom of the resonator to a base of the protruding portion. The heating target includes a resonator acceptance unit in a shape of a penetrating hole formed along a direction of pressing the resonator to reach a bottom of the heating target.

An ultrasonic welding method according to still another aspect of the present invention is bonding a columnar heating target formed with a resin to a predetermined bonding target by pressing a resonator against the heating target and applying a high frequency vibration from the resonator to the heating target. The ultrasonic welding method includes preheating a contact portion of the resonator on which the resonator contacts with the heating target; and heating including pressing the contact portion heated at the preheating against the heating target to apply a high frequency vibration to the heating target.

### EFFECT OF THE INVENTION

With the ultrasonic welding structure according to the present invention, the notch accepts the molten resin or relaxes the stress generated within the resin. It is, therefore, possible to reduce occurrence of a crack and the like that is one of the conventional problems.

With the ultrasonic welding structure according to the present invention, the molten resin is accepted by the acceptance unit. An area by which the resin and the fixing resins mutually contact is increased and a bonding force is strengthened. In addition, a portion in which the resin and the fixing resins mutually contact is made thick, thereby improving strength.

With the ultrasonic welding structure according to the present invention, the inner edge of the insertion hole is notched to form the stress relaxing unit. Therefore, even if the inner edge of the insertion hole does not contact with or contacts an outer surface of the resin, stress concentration that occurs to the resin is relaxed. It is, therefore, possible to solve all of or part of the conventional problems.

With the ultrasonic welding structure according to the present invention, the resin is fixed to three points by both ends of the proximal portion of the resin and the resonator connecting unit. Therefore, even if the resonator is erroneously positioned relative to the resin, the three fixing positions of the resin are always the same. It is, therefore, possible to always keep the three-point fixed state balanced and reduce occurrence of the crack and the like.

With the ultrasonic welding structure according to the present invention, the protruding portion of the resonator is formed to be generally semispherical or generally conical. Even if the resonator is erroneously positioned relative to the resin, the welding can proceed in an appropriate positional relationship and all of or part of the conventional problems can be solved.

With the ultrasonic welding structure according to the present invention, by causing the inclined surface to press the heating target, the softened resin is fallen down outward. The welding can be, therefore, performed with the low force, and the problems resulting from the excessive pressing force can be solved.

With the ultrasonic welding structure according to the present invention, even if the resonator is erroneously positioned relative to the resin, the protruding portion is accepted by the resonator acceptance unit. In addition, this resonator acceptance unit has the correcting force for correcting a position of the resonator to an appropriate position. Therefore, the welding can proceed in an appropriate positional relationship and all of or part of the conventional problems can be solved.

With the ultrasonic welding structure according to the present invention, the generally semispherical protruding portion is smoothly guided by the generally conical resonator acceptance unit, and the resonator positioning error can be smoothly corrected.

With the ultrasonic welding structure according to the present invention, by causing the resonator to press the elongated hole-shaped resonator acceptance unit, the softened resin is fallen down outward. It is, therefore, possible to weaken the pressing force of the resonator as compared with the conventional technique, perform the welding with the low force, and thereby solve the problems resulting from the excessive pressing force.

With the ultrasonic welding structure according to the present invention, since the resonator acceptance unit is formed into the penetrating shape, the rod unit for the resin die for the acceptance unit can be fixed by supporting both ends thereof. It is, therefore, easy to form the resonance acceptance unit.

With the ultrasonic welding structure according to the present invention, even if the horn is erroneously positioned relative to the resin, the protruding portion of the resonator is guided inward of the resonator acceptance unit by the notch. The positioning error can be thereby reduced.

With the ultrasonic welding structure according to the present invention, while only the small-diameter portion is molten to fulfill the function of being fixedly bonded to the fixing resins, the large-diameter portion maintains a resin strength without being molten. It is, therefore, possible to solve all of or part of the conventional problems.

With the ultrasonic welding structure according to the present invention, since the welding can be performed with the inflection surface that has a greatest structural change held by the fixing resins, the inflection surface can be stably held and all of or part of the conventional problems can be solved. As compared with the instance of arranging the inflection surface upward of the upper surface of the fixing resins, in particular, occurrence of the void and the ridge can be reduced.

With the ultrasonic welding structure according to the present invention, by causing the inclined surface to press the resonator acceptance unit, this pressing force generates an outward component force corresponding to an inclination of the inclined surface to fall down the softened resin outward. This resin thus fallen down is fixedly bonded onto an upper surface of the fixing resins, whereby the resin can be fixed. By thus using the component force resulting from the pressing force, the pressing force of the resonator can be reduced as compared with the conventional technique. Since the welding can be performed with the lower force, the problems derived from the excessive pressing force can be solved. Besides, since the resonator acceptance unit is formed into the penetrating shape, the rod unit for the resin die for the acceptance unit can.be fixed by supporting both ends thereof. The resonator acceptance unit can be, therefore, easily formed.

With the ultrasonic welding method according to the present invention, the vibration stroke is set short as a whole as compared with the conventional technique. However, in an initial welding period in which the Young's modulus of the resin is high, the resin is softened by the heat of the resonator. After the Young's modulus is reduced, the ultrasonic welding is performed by the vibration stroke that is short as a whole as compared with the conventional technique. This can prevent an excessive vibration from being applied to the resin and can reduce the void and the like.

### BRIEF DESCRIPTION OF DRAWINGS

Fig. 1 is a schematic perspective view of an ultrasonic welding apparatus according to a first embodiment of the present invention;
Fig. 2 is a table of a relationship between measures against a cause for each of conventional problems and an effect of the measures;
Fig. 3 is a longitudinal sectional view of a resin;
Fig. 4 is a longitudinal sectional view of an ultrasonic welding structure according to the first embodiment before welding;
Fig. 5 is a longitudinal sectional view of an ultrasonic welding structure according to the first embodiment after welding;
Fig. 6 is a longitudinal sectional view of an ultrasonic welding structure according to a second embodiment of the present invention before welding;
Fig. 7 is a longitudinal sectional view of an ultrasonic welding structure according to the second embodiment after welding;
Fig. 8 is a longitudinal sectional view of an ultrasonic welding structure according to a third embodiment of the present invention before welding;
Fig. 9 is a longitudinal sectional view of an ultrasonic welding structure according to the third embodiment after welding;
Fig. 10 is a longitudinal sectional view of an ultrasonic welding structure according to a fourth embodiment of the present invention before welding;
Fig. 11 is a longitudinal sectional view of an ultrasonic welding structure according to the fourth embodiment after welding;
Fig. 12 is a longitudinal sectional view of a protruding portion of a horn according to a fifth embodiment of the present invention;
Fig. 13 is a longitudinal sectional view of an ultrasonic welding structure according to the fifth embodiment before welding;
Fig. 14 is a longitudinal sectional view of an ultrasonic welding structure according to the fifth embodiment after welding;
Fig. 15 is a longitudinal sectional view of an ultrasonic welding structure according to a sixth embodiment of the present invention before welding;
Fig. 16 is a longitudinal sectional view of an ultrasonic welding structure according to the sixth embodiment after welding;
Fig. 17 is a longitudinal sectional view of an ultrasonic welding structure according to a seventh embodiment of the present invention before welding;
Fig. 18 is a longitudinal sectional view of an ultrasonic welding structure according to the seventh embodiment after welding;
Fig. 19 is a schematic perspective view of an ultrasonic welding apparatus according to an eighth embodiment of the present invention;
Fig. 20 is a longitudinal sectional view of an ultrasonic welding structure according to the eighth embodiment before welding;
Fig. 21 is a longitudinal sectional view of an ultrasonic welding structure according to the eighth embodiment after welding;
Fig. 22 is a longitudinal sectional view of an ultrasonic welding structure according to a ninth embodiment of the present invention before welding;
Fig. 23 is a longitudinal sectional view of an ultrasonic welding structure according to the ninth embodiment after welding;
Fig. 24 is a longitudinal sectional view of an ultrasonic welding structure according to a tenth embodiment of the present invention before welding;
Fig. 25 is a longitudinal sectional view of an ultrasonic welding structure according to the tenth embodiment after welding;
Fig. 26 is a perspective view of an example of using an actuator for ultrasonic welding;
Fig. 27 is an enlarged perspective view of a welded portion before welding;
Fig. 28 is an enlarged perspective view of the welded portion after welding;
Fig. 29 is a longitudinal sectional view of surroundings of the welded portion before welding;
Fig. 30 is a longitudinal sectional view of surroundings of the welded portion after welding; and
Fig. 31 is a table of a correlation between each phenomenon that can possibly occur to conventional ultrasonic welding and a main cause for the phenomenon.

### EXPLANATIONS OF LETTERS OR NUMERALS

- 1: Ultrasonic welding apparatus
- 2: Booster
- 3: Horn
- 3a: Concave portion
- 3b: Protrusion
- 3c, 3f: Protruding portion
- 3e: Inclined surface
- 4: Acceptance tool
- 5: Heater
- 10: Resin
- 14: Resonator connecting unit
- 15: Large-diameter portion
- 16: Small-diameter portion
- 17, 19: Resonator acceptance unit
- 19a: Notch
- 20: Plate spring
- 21: Fixing resin
- 23: Insertion hole
- 24: Acceptance unit
- P: Inflection surface

### BEST MODE(S) FOR CARRYING OUT THE INVENTION

Exemplary embodiments of an ultrasonic welding structure and an ultrasonic welding method according to the present invention will be explained below in detail with reference to the accompanying drawings. Note that the invention is not limited to the embodiments.

### FIRST EMBODIMENT

An ultrasonic welding structure and an ultrasonic welding method according to a first embodiment of the present invention will be explained. The first embodiment is generally characterized in that a notch is formed in an inner edge of an insertion hole of a bonding target on a side facing a resonator. The first embodiment is characterized particularly in that this notch serves as an acceptance unit that accepts a heating target in a molten state.

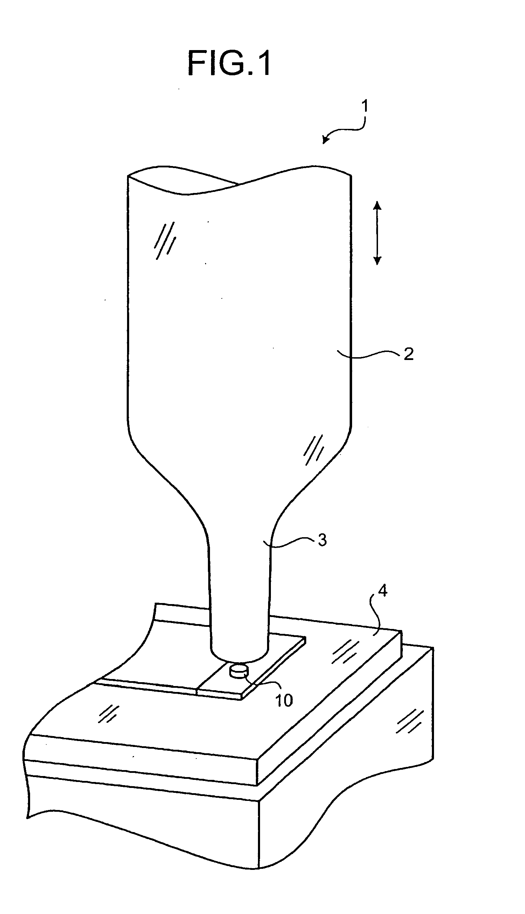

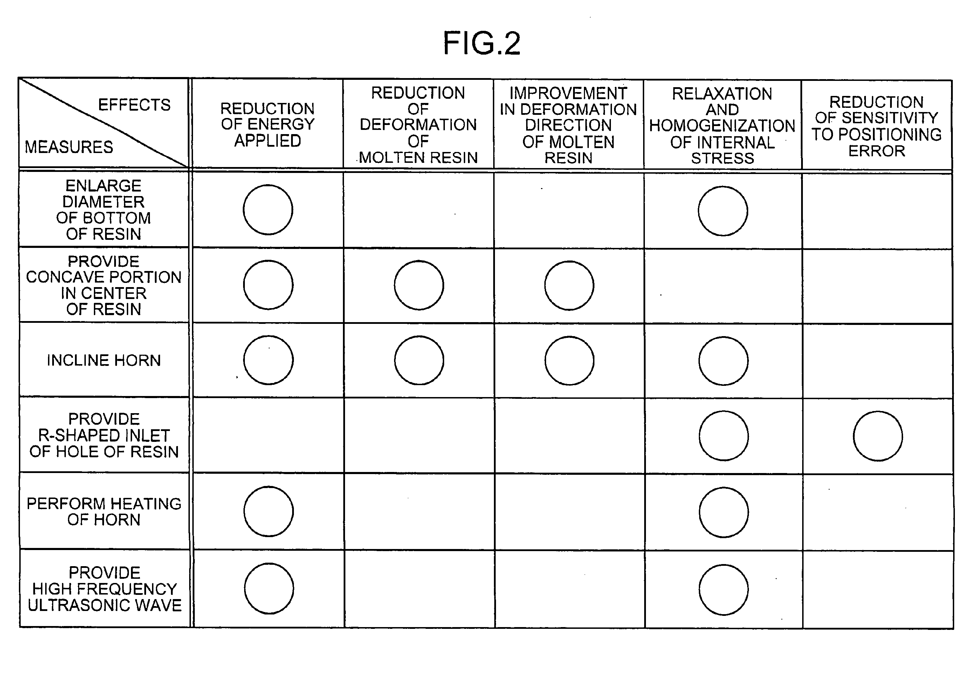

Fig. 1 is a schematic perspective view of an ultrasonic welding apparatus according to the first embodiment. As shown in Fig. 1, the ultrasonic welding apparatus 1 includes a booster 2, a horn 3 provided on an end of the booster 2 and serving as a resonator, and an acceptance tool 4 arranged to face the horn 3. A vibrator (not shown) is provided within the booster 2 and a vibration generated by the vibrator is transmitted to the horn 3. The booster 2 is pressurized by a pressure application source (not shown) to be moved in a direction of the acceptance tool 4 (which is a downward and pressurizing direction in Fig. 1). The horn 3 provided on a tip end of the booster 2 is thereby pressed against a resin 10 disposed on an upper surface of the acceptance tool 4 and serving as a heating target. By doing so, the vibration generated by the vibrator is transmitted to the resin 10 and high frequency vibration is, therefore, applied from the horn 3 to the resin 10. Fig. 2 is a table of the relationship between measures against a cause for each conventional problem, as illuminated by the applicant of the present invention, and an effect of the measures. A part of or all of the measures are attained by the first to tenth embodiments.

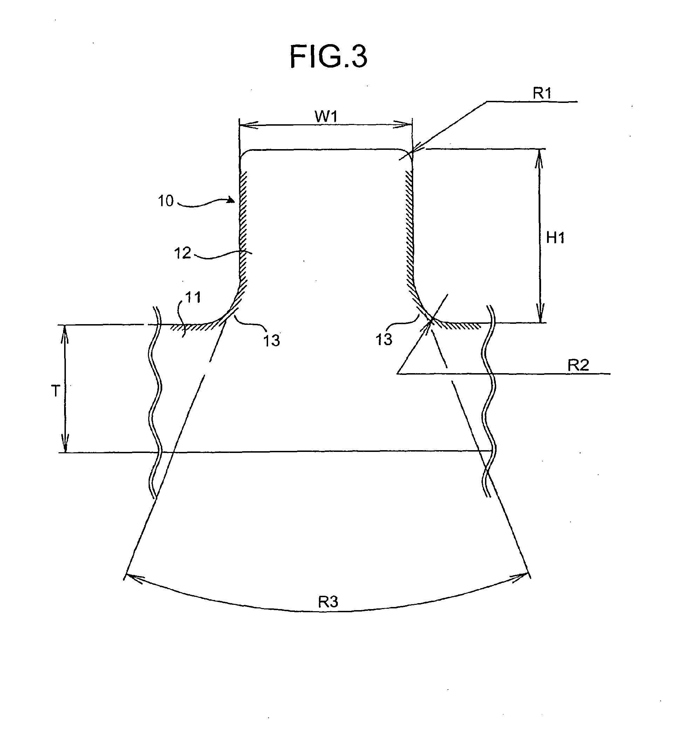

The resin 10 serving as the heating target used in the first embodiment will next be explained. Fig. 3 is a longitudinal sectional view of the resin. As shown in Fig. 3, the resin 10 is constituted by integrally including a flat proximal portion 11 and a columnar portion 12 rising from the proximal portion 11 toward the horn. More specifically, a thickness T of the proximal portion 11 is 2 millimeters, a diameter W1 of the columnar portion 12 is 2.72 millimeters, a radius R1 of a chamfered portion on an upper edge of the columnar portion 12 is 0.2 millimeter. A total height H1 of the columnar portion 12 is 2.7 millimeters, a radius R2 of a joint portion 13 from the columnar portion 12 to the proximal portion 11 is 0.5, and an angle R3 formed by a pair of joint portions 13 is 43.6 degrees. The resin 10 is an amorphous resin, and polycarbonate or Acrylonitrile Butadiene Styrene (ABS) can be used as the resin. More preferably, the resin 10 consists of high fluidity resin manufactured by Mitsubishi Engineering-Plastics Corporation and identified as product number "S2000R". However, a shape of this resin can be arbitrarily changed.

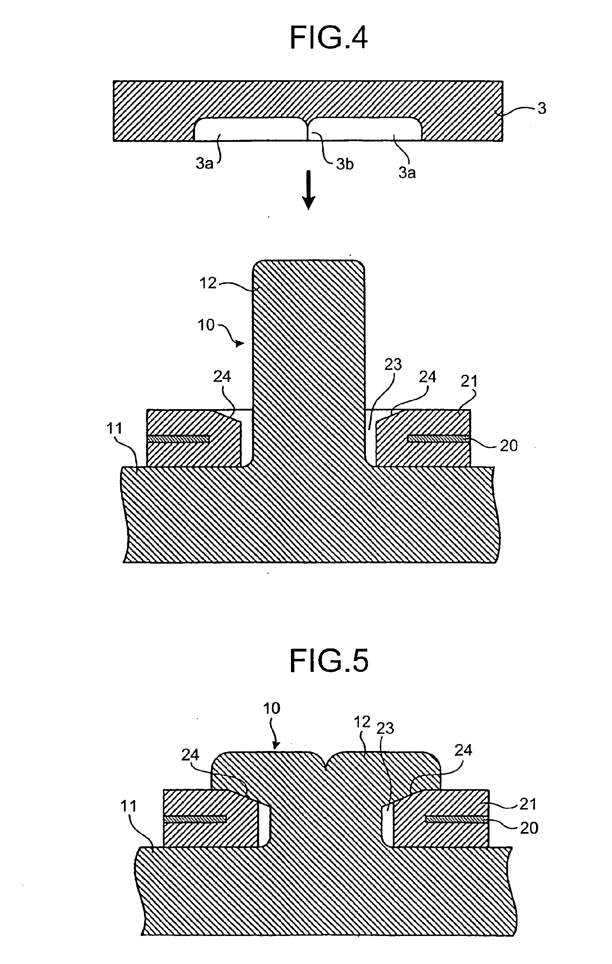

The ultrasonic welding structure according to the first embodiment will be explained. Fig. 4 is a longitudinal sectional view of the ultrasonic welding structure according to the first embodiment before welding, and Fig. 5 is a longitudinal sectional view of the ultrasonic welding structure according to the first embodiment after welding. As shown in Fig. 4, the horn 3 is basically equal in shape to the conventional horn shown in Fig. 29. Namely, a concave portion 3a contacting with the resin is provided on a bottom of the horn 3. A protrusion 3b protruding toward the resin is provided in the concave portion 3a.

As shown in Fig. 4, a bonding target is configured so that a plate spring 20 is put between fixing resins 21 similarly to the conventional technique shown in Fig. 29. An insertion hole 23 for inserting the resin is formed generally at a center of a flat surface of the fixing resins 21.

The insertion hole 23 of the fixing resins 21 includes an acceptance unit 24 that is provided on an inner edge of the insertion hole 23 on a side facing the horn 3 and that accepts the resin in a molten state. Namely, the inner edge of the insertion hole 23 is notched over an entire circumference of the insertion hole 23, whereby the acceptance unit 24 is formed on the upper edge of the insertion hole 23 as a space having a generally conical inclined surface.

The acceptance unit 24 functions as follows. As shown in Fig. 5, the resin molten by the vibrational energy generated by the horn 3 is accepted by the acceptance unit 24. By doing so, an area by which the resin 10 and the fixing resins 21 mutually contact is increased and a bonding force is strengthened. This can solve all of or part of the conventional problems. As long as the acceptance unit 24 can fulfill this function, a formation angle and a diameter of the acceptance unit 24 can be arbitrarily set. For instance, while the acceptance unit 24 is formed to have the conical inclined surface in the first embodiment, the acceptance unit 24 can be formed as a square or semispherical space.

### SECOND EMBODIMENT

An ultrasonic welding structure and an ultrasonic welding method according to the second embodiment of the present invention will be explained. The second embodiment is generally characterized as follows. A contact surface of a resonator on which the resonator contacts with a heating target is formed generally flat. The heating target includes a resonator connecting unit formed to protrude toward the resonator. The second embodiment is also generally characterized as follows. The heating target includes a large-diameter portion located on a proximal side of the heating target and a small-diameter portion located on the resonator side relative to the large-diameter portion and smaller in diameter than the large-diameter portion. The structure and the method that are not specifically explained herein are the same as those according to the first embodiment. Like constituent elements are denoted by like reference symbols, respectively.

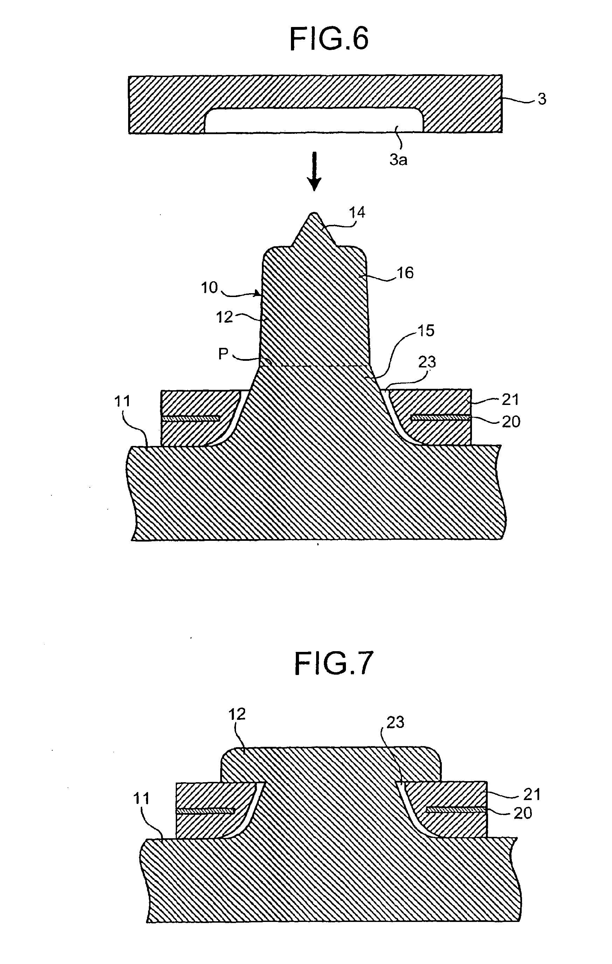

Fig. 6 is a longitudinal sectional view of the ultrasonic welding structure according to the second embodiment before welding, and Fig. 7 is a longitudinal sectional view of the ultrasonic welding structure according to the second embodiment after welding. As shown in Fig. 6, the concave portion 3a that is a contact surface with the resin 10 is formed not to include a protrusion but to be generally flat. The resin 10 includes a resonator connecting unit 14 formed to protrude toward the horn 3. The resonator connecting unit 14 is formed integrally with the resin 10 using the same material by a die. The resonator connecting unit 14 is formed to rise generally conically toward the horn 3 generally in a central position of an upper surface of the resin 10.

The resonator connecting unit 14 functions as follows. According to the conventional technique shown in Fig. 29, the protrusion 106b is formed on the bottom of the horn 3. In this case, while the protrusion 106b is pressed against the resin 10 that is not softened, the resin 10 is fixed to three points by both ends of the proximal portion of the resin 10 and the protrusion 106b. For this reason, if the horn 3 is erroneously positioned relative to the resin 10 in a horizontal direction, this three-point fixed state turns unstable. This causes application of an excessive stress or the like to the resin 10, which causes a crack and the like. With the configuration of the second embodiment, by contrast, the resin 10 is fixed to three points by both ends of the proximal portion of the resin 10 and the resonator connecting unit 14. In this case, even if the horn 3 is erroneously positioned relative to the resin 10, the three fixing positions of the resin 10 are always the same. It is, therefore, possible to always keep the three-point fixed state balanced and reduce occurrence of the crack and the like. This can solve all of or part of the conventional problems.

As long as the resonator connecting unit 14 fulfills this function, a formation angle and a diameter of the resonator connecting unit 14 can be arbitrarily set. For instance, while the resonator connecting unit 14 is formed conically in the second embodiment, the resonator connecting unit 14 can be formed to be columnar.

The resin 10 is configured to integrally include a large-diameter portion 15 and a small-diameter portion 16. Among these constituent elements, the large-diameter portion 15 is located on the proximal side of the resin 10 and connected to the proximal portion through an inclined portion gradually larger in diameter toward this proximal portion. The large-diameter portion 15 is formed larger in diameter than the small-diameter portion 16. If a boundary surface between the large-diameter portion 15 and the small-diameter portion 16 is defined as an inflection surface P, the resin 10 is formed so that the inflection surface P is located on the horn side relative to the upper surface of the fixing resins 21 in the second embodiment.

The large-diameter portion 15 and the small-diameter portion 16 function as follows. According to the conventional technique shown in Fig. 29, the columnar portion of the resin 10 is formed to have a generally equal diameter. In this case, not only an upper portion but also a lower portion of the resin 10 is molten by the vibration energy from the horn 3, thereby causing the crack and the like. With the configuration of the second embodiment, by contrast, while only the small-diameter portion 16 is molten to fulfill a function of being fixedly bonded to the fixing resins 21, the large-diameter portion 15 maintains resin strength without being molten. It is, therefore, possible to solve all of or part of the conventional problems.

As long as the large-diameter portion 15 and the small-diameter portion 16 fulfill this function, diameters and shapes of the portions 15 and 16 can be arbitrarily set. For instance, length and diameter ratios of the small-diameter portion 16 to the large diameter portion 15 can be changed. In addition, the configuration of the resin 10 is not limited to the two-stage configuration including the large-diameter portion 15 and the small-diameter portion 16 but may be a configuration of three or more stages by further forming a different-diameter portion.

### THIRD EMBODIMENT

An ultrasonic welding structure and an ultrasonic welding method according to the third embodiment of the present invention will be explained. The third embodiment is generally characterized as follows. A resonator includes a protruding portion that protrudes from a bottom of the resonator toward a heating target, and the heating target includes a resonator acceptance unit that is formed to be concave at least relative to the resonator. The third embodiment is also generally characterized as follows. The heating target includes a large-diameter portion located on a proximal side of the heating target and a small-diameter portion located on the resonator side relative to the large-diameter portion and smaller in diameter than the large-diameter portion. The structure and the method that are not specifically explained herein are the same as those according to the second embodiment. Like constituent elements are denoted by the same reference symbols, respectively.

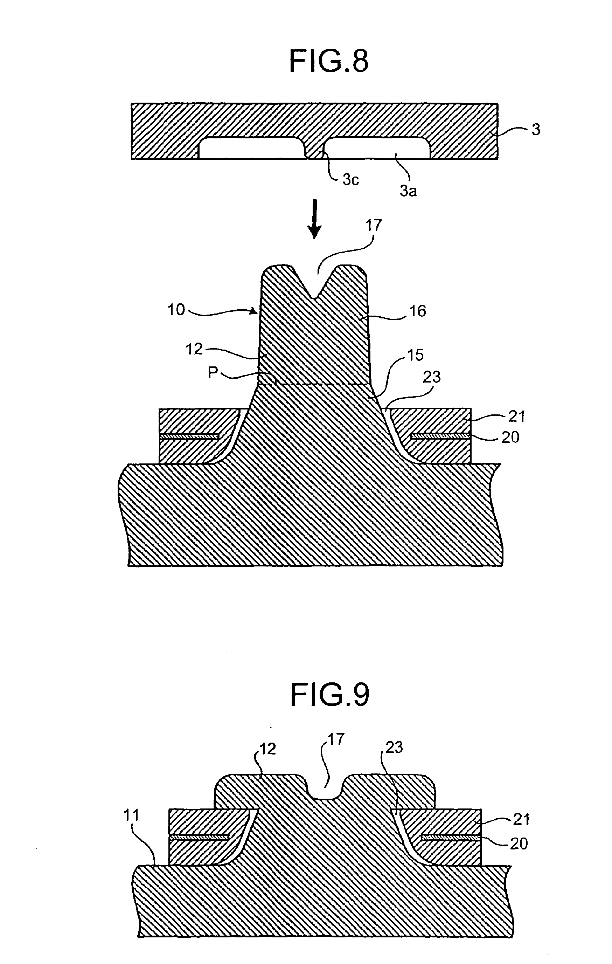

Fig. 8 is a longitudinal sectional view of the ultrasonic welding structure according to the third embodiment before welding, and Fig. 9 is a longitudinal sectional view of the ultrasonic welding structure according to the third embodiment after welding. As shown in Fig. 3, the horn 3 includes a protruding portion 3c. This protruding portion 3c protrudes generally from a center of the concave portion 3a on a bottom of the horn 3 toward the resin 10. As shown therein, the protruding portion 3c has a generally semispherical longitudinal cross section.

The resin 10 includes a resonator acceptance unit 17. The resonator acceptance unit 17 is formed at a center of an upper surface of the resin 10 into a generally conical (concave) shape that can accept the generally semispherical protruding portion 3c. Namely, an upper portion of an opening of the resonator acceptance unit 17 is formed to have a diameter slightly larger than a largest diameter of the protruding portion 3c, with the diameter generally smaller toward the proximal portion of the resin 10.

The protruding portion 3c and the resonator acceptance unit 17 function as follows. According to the conventional technique shown in Fig. 29, the protrusion 106b is formed on the bottom of the horn 3. The upper surface of the resin 10 is formed simply flat. With this structure, if the horn 3 is erroneously positioned relative to the resin 10 in the horizontal direction, a correction force for correcting this error does not work. As a result, welding proceeds without permitting the error. With the configuration of the third embodiment, by contrast, even if the horn 3 is erroneously positioned relative to the resin 10, the protruding portion 3c is accepted by the resonator acceptance unit 17. In addition, this resonator acceptance unit 17 has the correcting force for correcting a position of the horn 3 to an appropriate position. Therefore, the welding can proceed in an appropriate positional relationship and all of or part of the conventional problems can be solved. According to the third embodiment, in particular, since the generally semispherical protruding portion 3c is smoothly guided by the generally conical resonator acceptance unit 17, the positioning error of the horn 3 can be smoothly corrected. As long as the protruding portion 3c and the resonator acceptance unit 17 fulfill this function, shapes of the protruding portion 3c and the resonator acceptance unit 17 can be arbitrarily set. For instance, the protruding portion 3c can be formed to be generally conical.

### FOURTH EMBODIMENT

An ultrasonic welding structure and an ultrasonic welding method according to the fourth embodiment of the present invention will be explained. The fourth embodiment is generally characterized as follows. A bonding target includes an insertion hole for inserting a heating target. A boundary surface between a large-diameter portion and a small-diameter portion of the heating target is arranged downward of an upper surface of the bonding target while the heating target is inserted into the insertion hole. The fourth embodiment is also characterized as follows. The insertion hole of the bonding target includes a notch in an inner edge of the insertion hole on a side facing a resonator, and this notch serves as a stress relaxing.unit that relaxes a stress generated within the bonding target by contacting with the inner edge of the insertion hole. The structure and the method that are not specifically explained herein are the same as those according to the third embodiment. Like constituent elements are denoted by like reference symbols, respectively.

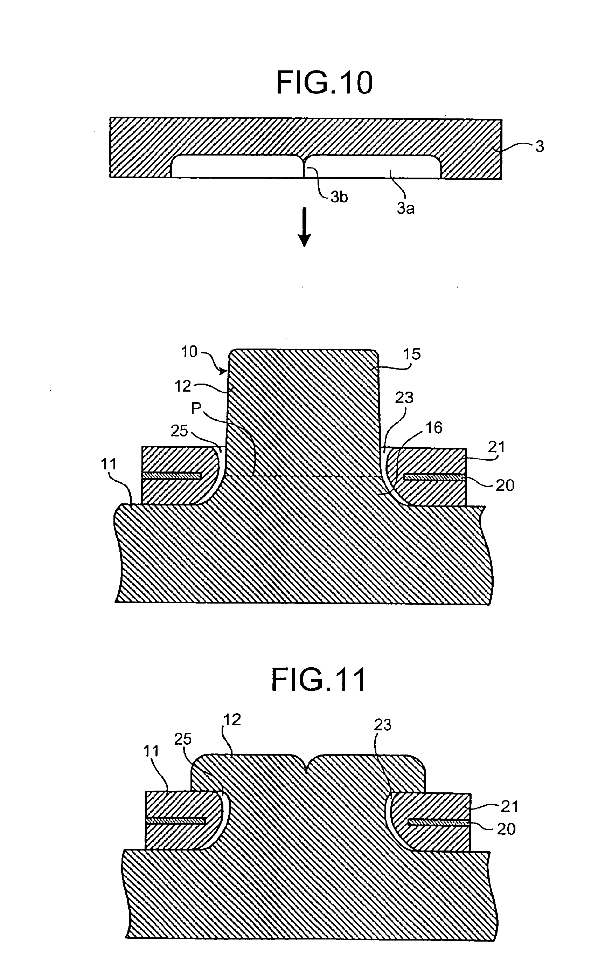

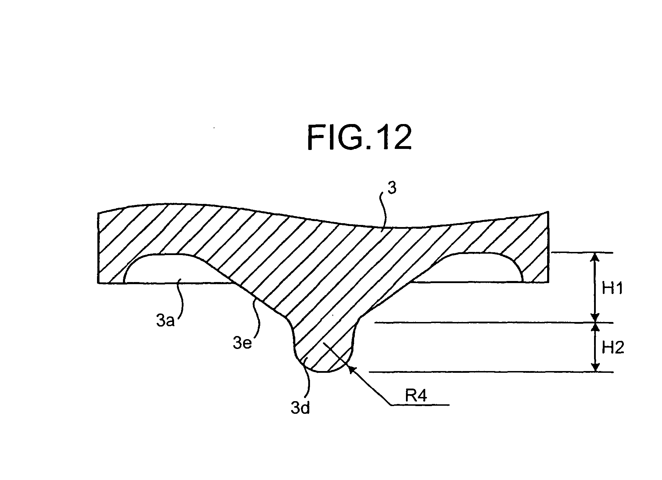

Fig. 10 is a longitudinal sectional view of the ultrasonic welding structure according to the fourth embodiment before welding, and Fig. 11 is a longitudinal sectional view of the ultrasonic welding structure according to the fourth embodiment after welding. As shown in Fig. 10, the concave portion 3b contacting with the resin 10 is provided on a bottom of the horn 3 similarly to the conventional technique, and the protrusion 3b protruding toward the resin is provided in the concave portion 3b.

The resin 10 includes the large-diameter portion 15 and the small-diameter portion 16. An inflection surface P that is the boundary surface between the large-diameter portion 15 and the small-diameter portion 16 is arranged downward of an upper surface of the fixing resins 21. Namely, by setting a length of the small-diameter portion 16 relative to that of the large-diameter portion larger as compared with the second to the third embodiments, the inflection surface P is lowered.

The inflection surface P functions as follows. Since the welding can be performed with the inflection surface P that has a greatest structural change held by the fixing resins 21, the inflection surface P can be stably held and all of or part of the conventional problems can be solved. As compared with the instance of arranging the inflection surface P upward of the upper surface of the fixing resins 21 (the second to the third embodiments), occurrence of the void and ridge can be reduced.

As long as the inflection surface P fulfils this function, diameters and shapes of the large-diameter portion 15 and the small-diameter portion 16 can be arbitrarily set..For instance, length and diameter ratios of the small-diameter portion 16 to the large diameter portion 15 can be changed. In addition, the configuration of the resin 10 is not limited to the two-stage configuration including the large-diameter portion 15 and the small-diameter portion 16 and can be a configuration of three or more stages by further forming a different-diameter portion. Further, while the inflection surface P is preferably located between the upper surface and the lower surface of the fixing resins 21, the inflection surface P can be arranged downward of the lower surface of the fixing resins 21.

A stress relaxing unit 25 is provided in the insertion hole 23 of the fixing resins 21. The stress relaxing unit 25 is formed by notching the inner edge of the insertion hole 23 on a side facing the resonator similarly to the first embodiment. However, as compared with the acceptance unit according to the first embodiment, the stress relaxing unit 25 is small, e.g., about 0.2 millimeter in R.

The stress relaxing unit 25 functions as follows. According to the second to the third embodiments, after the resin 10 is molten, the inner edge of the insertion hole 23 contacts with the surface of the resin 10 due to lack of the notch in the inner edge. As a result, a stress concentration occurs to surrounding portions of the insertion hole 23 of the resin 10, this can possibly cause the crack and the like. According to the fourth embodiment, by contrast, since the inner edge is notched to form the stress relaxing unit 25, this inner edge does not contact with the surface of the resin 10 after the resin 10 is molten. Alternatively, even if it contacts, a stress that can possibly be generated by this contact is relaxed as compared with the conventional technique. It is, therefore, possible to avoid the stress concentration that can possibly occur to the surrounding portions of the insertion hole 23 of the resin 10, and reduce the crack and the like. As long as the stress relaxing unit 25 can fulfill this function, a diameter and a shape of the stress relaxing unit 25 can be arbitrarily set.

### FIFTH EMBODIMENT

An ultrasonic welding structure and an ultrasonic welding method according to the fifth embodiment of the present invention will be explained. The fifth embodiment is generally characterized as follows. A resonator includes a protruding portion that protrudes from a bottom of the resonator toward a heating target. The protruding portion is formed to be generally semispherical or generally conical. The fifth embodiment is also generally characterized as follows. An inclined surface from the bottom of the resonator to a proximal portion of the protruding portion is formed on the resonator. The structure and the method that are not specifically explained herein are the same as those according to the fourth embodiment. Like constituent elements are denoted by like reference symbols, respectively.

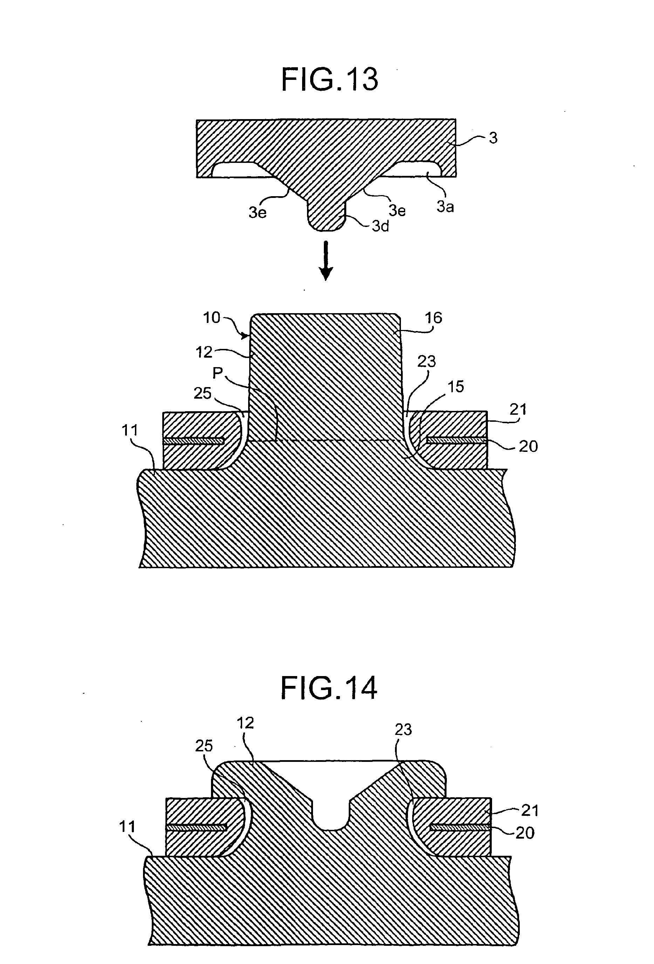

Fig. 12 is a longitudinal sectional view of the protruding portion of the horn 3 according to the fifth embodiment. Fig. 13 is a longitudinal sectional view of the ultrasonic welding structure according to the fifth embodiment before welding, and Fig. 14 is a longitudinal sectional view of the ultrasonic welding structure according to the fifth embodiment after welding. As shown in Fig. 12, the horn 3 includes the concave portion 3a, and the concave portion 3a includes a protruding portion 3d having a generally semispherical longitudinal cross section. Differently from the protruding portion 3c shown in Fig. 8, the protruding portion 3d is formed to protrude downward of a bottom of the concave portion 3a. In addition, an inclined surface 3e is formed on the horn 3. The inclined surface 3e is formed integrally with the horn 3 and the protruding portion 3d, and is a smooth continuous surface from the bottom of the concave portion of the horn 3 to the proximal portion of the protruding portion 3d. As shown in Fig. 12, exemplarily specific dimensions of the protruding portion 3d are a radius R4 of a sphere of 0.3 millimeter, and heights H1 and H2 of 0.7 millimeter and 0.5 millimeter, respectively.

The protruding portion 3d and the inclined surface 3e function as follows. By pressing the protruding portion 3d against the resin 10 first, it is possible to soften only a part of the resin 10 and to gradually perform welding. By causing the inclined surface 3e to press a resonator acceptance unit 18, in particular, this pressing force generates an outward component force corresponding to an inclination of the inclined surface to fall down the softened resin 10 outward. The resin 10 thus fallen down is fixedly bonded onto an upper surface of the fixing resins 21, whereby the resin 10 can be fixed. By thus using the component force resulting from the pressing force, the pressing force of the horn 3 can be reduced as compared with the conventional technique. Since the welding can be performed with the lower force, the problems derived from the excessive pressing force can be solved.

### SIXTH EMBODIMENT

An ultrasonic welding structure and an ultrasonic welding method according to the sixth embodiment of the present invention will be explained. The sixth embodiment is generally characterized as follows. A resonator includes a protruding portion that protrudes from a bottom of the resonator toward a heating target. The heating target includes a resonator acceptance unit that is formed to be concave at least relative to the resonator. This protruding portion is, in particular, formed into an elongated hole along a pressing direction of the resonator. The sixth embodiment is also generally characterized as follows. An inclined surface from the bottom of the resonator to a proximal portion of the protruding portion is formed on the resonator. Furthermore, the sixth embodiment is generally characterized as follows. An insertion hole of a bonding target includes a notch in an inner edge thereof on a side facing the resonator. This notch serves as a stress relaxing unit that relaxes a stress generated within the bonding target by contacting with the inner edge of the insertion hole. The structure and the method that are not specifically explained herein are the same as those according to the fifth embodiment. Like constituent elements are denoted by like reference symbols, respectively.

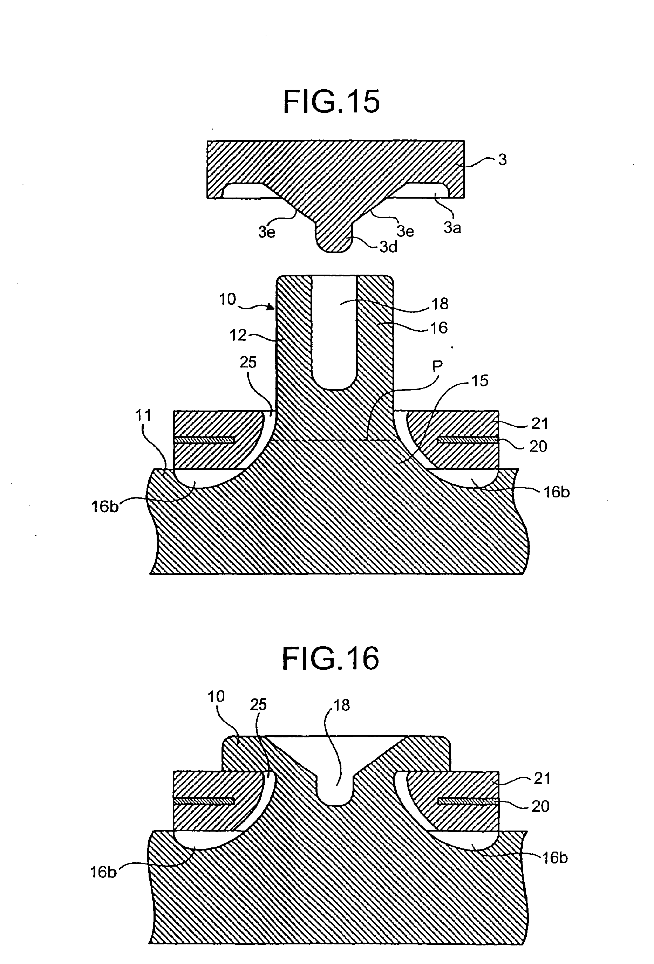

Fig. 15 is a longitudinal sectional view of the ultrasonic welding structure according to the sixth embodiment before welding, and Fig. 16 is a longitudinal sectional view of the ultrasonic welding structure according to the sixth embodiment after welding. As shown in Fig. 15, the resin 10 includes the resonator acceptance unit 18 that is formed to be concave at least relative to the horn 3 similarly to the third embodiment. However, differently from the third embodiment, the resonator acceptance unit 18 is formed into an elongated hole (cylindrical space) generally along a pressing direction (which is vertical direction in Fig. 15) of the horn 3. A bottom of the resonator acceptance unit 18 is located slightly upward of an upper surface of the fixing resins 21.

The protruding portion 3d, the resonator acceptance unit 18, and the inclined surface 3e function as follows. By pressing the protruding portion 3d against the resin 10 first, it is possible to soften only a part of the resin 10 and to gradually perform welding. By causing the inclined surface 3e to press the resonator acceptance unit 18, in particular, this pressing force generates an outward component force corresponding to an inclination of the inclined surface 3e to fall down the softened resin 10 outward. Since the resonator acceptance unit 18 is the elongated hole, the softened resin 10 can be fallen down more easily. The resin 10 thus fallen down is fixedly bonded onto an upper surface of the fixing resins 21, whereby the resin 10 can be fixed. By thus using the component force resulting from the pressing force, the pressing force of the horn 3 can be reduced as compared with the conventional technique. Since the welding can be performed with the lower force, the problems derived from the excessive pressing force can be solved. Since the resonator acceptance unit 18 is formed, a total amount of the resin 10 is reduced accordingly. However, by falling down the resin 10, most parts of the resin 10 ride on the upper surface of the fixing resins 21. A required fixing force can be, therefore, attained.

As long as the protruding portion 3d, the resonator acceptance unit 18, and the inclined surface 3e fulfill this function, shapes of the protruding portion 3d, the resonator acceptance unit 18, and the inclined surface 3e can be arbitrarily set. For instance, the resonator acceptance unit 18 can be formed as a prismatic space. The bottom of the resonator acceptance unit 18 can be arranged downward of the upper surface of the fixing resins 21. In the sixth embodiment, a counter boring portion 16b is further provided below the fixing resins 21. The counter boring portion 16b can increase a curvature of the proximal portion of the resin 10 and thereby avoid excessive stress concentration and the like.

### SEVENTH EMBODIMENT

An ultrasonic welding structure and an ultrasonic welding method according to the seventh embodiment of the present invention will be explained. The seventh embodiment, which is similar to the sixth embodiment, is generally characterized as follows. A resonator acceptance unit is formed as a penetrating hole that reaches a bottom of a heating target along a pressing direction of a resonator. The structure and the method that are not specifically explained herein are the same as those according to the sixth embodiment. Like constituent elements are denoted by like reference symbols, respectively.

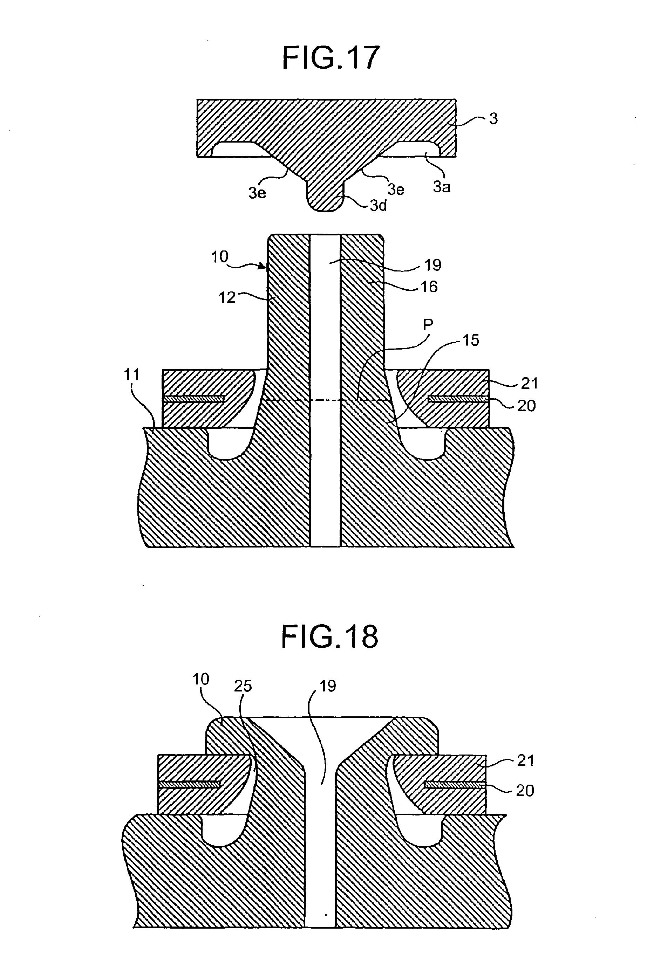

Fig. 17 is a longitudinal sectional view of the ultrasonic welding structure according to the seventh embodiment before welding, and Fig. 18 is a longitudinal sectional view of the ultrasonic welding structure according to the seventh embodiment after welding. As shown in Fig. 17, the resin 10 includes a resonator acceptance unit 19 that is formed to be concave at least relative to the horn 3 similarly to the sixth embodiment. However, differently from the sixth embodiment, the resonator acceptance unit 19 is formed into a penetrating hole that reaches the bottom of the resin 10 along the pressing direction of the horn 3.

The protruding portion 3d, the resonator acceptance unit 19, and the inclined surface 3e function as follows. Similarly to the sixth embodiment, by falling down the resin 3 toward the fixing resins 21 by a component force derived from the pressing force, the resin can be fixed. If the resonator acceptance unit 18 is formed into the elongated hole as explained in the sixth embodiment, it is necessary to provide a resin die with a rod unit corresponding to the resonator acceptance unit 19. It is particularly necessary to fix the rod unit by supporting one end thereof. However, such a one-end support structure is weak to an external force and the rod unit can be easily bent. It is, therefore, difficult to form the resonator acceptance unit 19. According to the seventh embodiment, by contrast, since the resonator acceptance unit 19 is formed into the penetrating hole, the rod unit for the resin die can be fixed by supporting both ends thereof. It is, therefore, easy to form the resonator acceptance unit 19.

### EIGHTH EMBODIMENT

An ultrasonic welding structure and an ultrasonic welding method according to the eighth embodiment will be explained. The eighth embodiment, which is similar to the seventh embodiment, is generally characterized as follows. The method includes a preheating step of heating a contact portion of a resonator on which the resonator contact with the heating target, and a heating step of pressing the bonded portion heated at the heating step against the heating target and of applying a high frequency vibration to the heating target. The structure and the method that are not specifically explained herein are the same as those according to the seventh embodiment. Like constituent elements are denoted by like reference symbols, respectively.

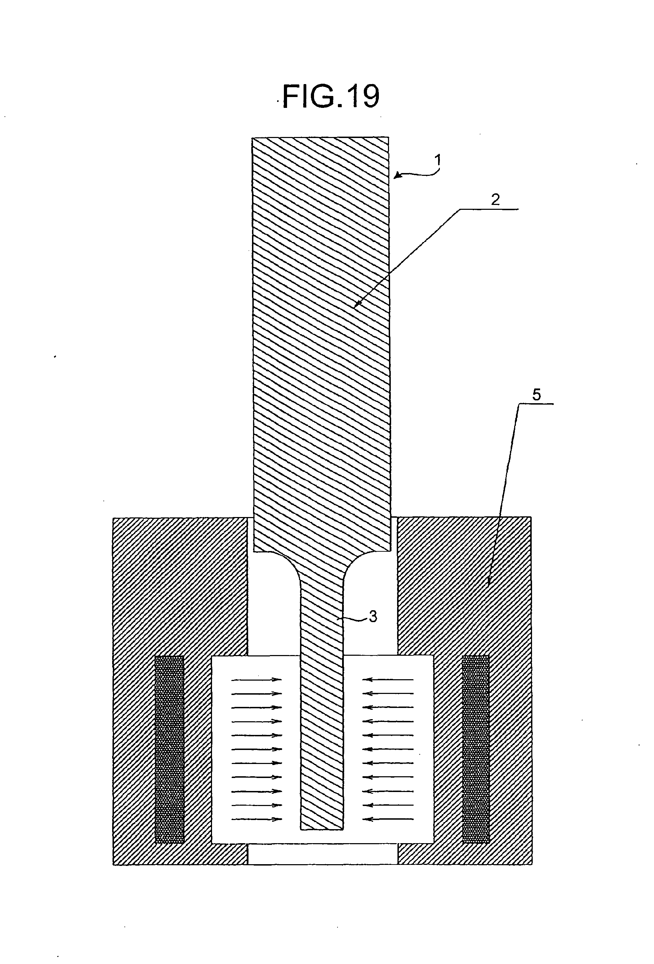

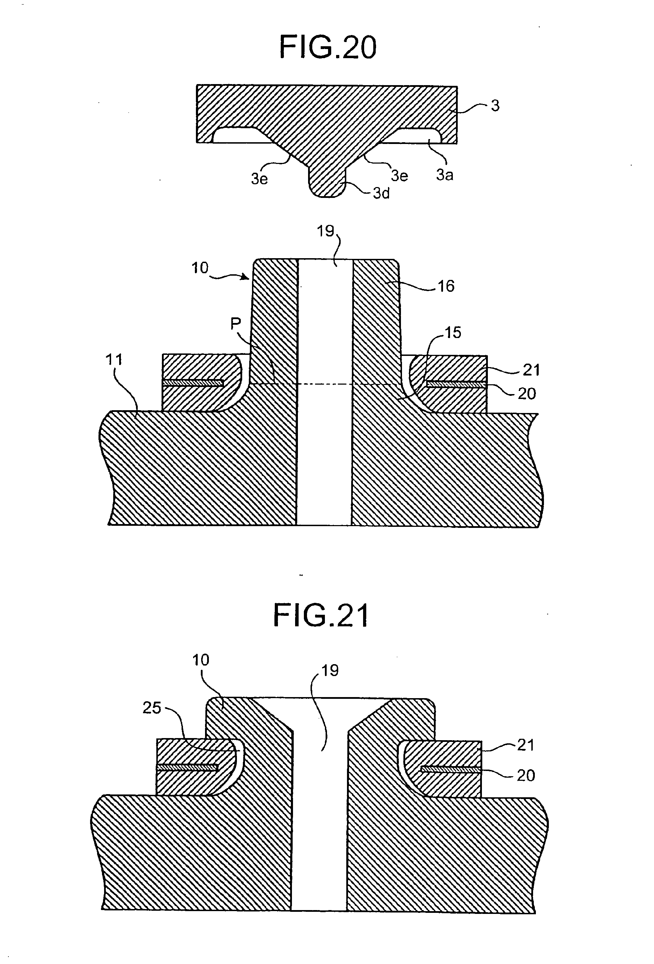

Fig. 19 is a schematic perspective view of an ultrasonic welding apparatus according to the eighth embodiment. Fig. 20 is a longitudinal sectional view of the ultrasonic welding structure according to the eighth embodiment before welding, and Fig. 21 is a longitudinal sectional view of the ultrasonic welding structure according to the eighth embodiment after welding. As shown in Figs. 19 to 21, an ultrasonic welding apparatus 1 includes a heater 5. The heater 5 is a heating unit that heats the horn 3. Specifically, the heater 5 is preferably a heating unit that indirectly heats the horn 3 by far-infrared heating. For instance, a ceramic heater can be employed as the heater 5. The reason for using the heating unit that indirectly heats the horn 3 by far-infrared heating as follows. By the far-infrared heating, a heated part can be easily controlled. By the indirect heating, a vibration of the horn 3 is not inadvertently prevented.

According to the eighth embodiment, the horn 3 is heated by the heater 5 first (at the preheating step). An upper limit of a heating temperature is set lower than a glass transition temperature (transition point) of the resin 10 for the following reason. If the horn 3 is heated to a temperature equal to or higher than the glass transition temperature, then the resin 10 is molten and the vibrational energy is not transmitted to the resin 10. This could rather hamper the inherent function of the ultrasonic welding, that is, the function of melting the resin 10 using the vibrational energy. In addition, a lower limit of the heating temperature is a lowest temperature necessary to reduce a Young's modulus of the resin 10 by about 20%. If the Young's modulus is reduced by 20% or more, then softening of the resin 10 starts, and the effects of the eighth embodiment could possibly be exhibited experientially. An example of a specific numeric value is as follows. If a melting point of the resin 10 is 140 degrees, the horn 3 is heated to 100 to 110 degrees. It is noted that the entire horn 3 is not always heated but that at least a bonded portion of the horn 3 in which the horn 3 is bonded to the resin 10 can be heated.

The heated horn 3 is then pressed against the resin 10 and a high frequency vibration is applied to the resin 10, thereby performing fusion-bonding (at the heating step). By doing so, the resin is heated by the high frequency vibration while softening the resin 10 by the heat generated in the horn 3, and the welding can be performed as shown in Fig. 13.

An effect of performing the welding using the heat of the horn 3 besides the high frequency vibration is as follows. Conventionally, a vibration stroke of the horn 3 is simply set constant before and after the heating, and this vibration stroke is set relatively long. If so, no problems occur initially because of the high Young's modulus of the resin 10. However, even after the Young's modulus is reduced, the vibration stroke is not reduced but remains relatively long. As a result, the resin 10 is excessively heated and excessively molten, thereby causing a deterioration of the resin 10. According to the eighth embodiment, by contrast, the vibration stroke of the horn 3 is similarly set constant but set short as a whole as compared with the conventional technique. In an initial welding period in which the Young's modulus of the resin 10 is high, the resin 10 is softened by the heat of the horn 3. After the Young's modulus is reduced, the ultrasonic welding is performed by the vibration stroke that is short as a whole as compared with the conventional technique. Namely, before the Young's modulus is reduced, the relatively long vibration stroke is applied so as to heat the resin 10. Once the Young's modulus is reduced, it is unnecessary to further heat the resin 10. Therefore, only the vibrational energy for deforming the resin 10 is applied to the resin 10. This can prevent the resin 10 from being excessively heated and can reduce a void and the like.

According to the eighth embodiment, an oscillating frequency is set high and the heating target is limited only to an upper portion of the resin. This is because it suffices to soften only the small-diameter portion in the upper portion of the resin 10. Specifically, the oscillating frequency of the horn 3 is set about 40 kilohertz according to the eighth embodiment while the oscillating frequency is normally about 28 to 40 kilohertz.

Normally, the horn 3 is controlled under two control conditions, i.e., pressing force management and vibration time or vibration stroke management. According to the eighth embodiment, the horn 3 is controlled by the pressing force management and the vibration stroke management. If the vibration stroke management rather than the vibration time management is performed, it is possible to directly exercise a stroke control for preventing an excessive vibration from being applied to the resin 10.

Moreover, a timing of oscillating the horn 3 is considered to be either a pre-oscillation timing of oscillating the horn 3 before the horn 3 contacts with the resin 10 or a post-oscillation timing of oscillating the horn 3 after the horn 3 contacts with the resin 10. In the eighth embodiment, the post-oscillation timing is adopted for the following reason. At the time the horn 3 is contacted with the resin 10, a reaction (a rebound) can possibly occur to the horn 3. By starting the vibration after this rebound disappears, it is possible to conduct a stable vibrational energy to the resin 10.

### NINTH EMBODIMENT

An ultrasonic welding structure and an ultrasonic welding method according to the ninth embodiment of the present invention will be explained. The ninth embodiment, which is similar to the eighth embodiment, is generally characterized in that a resonator acceptance unit includes a notch in an upper edge thereof. The structure and the method that are not specifically explained herein are the same as those according to the eighth embodiment. Like constituent elements are denoted by like reference symbols, respectively.

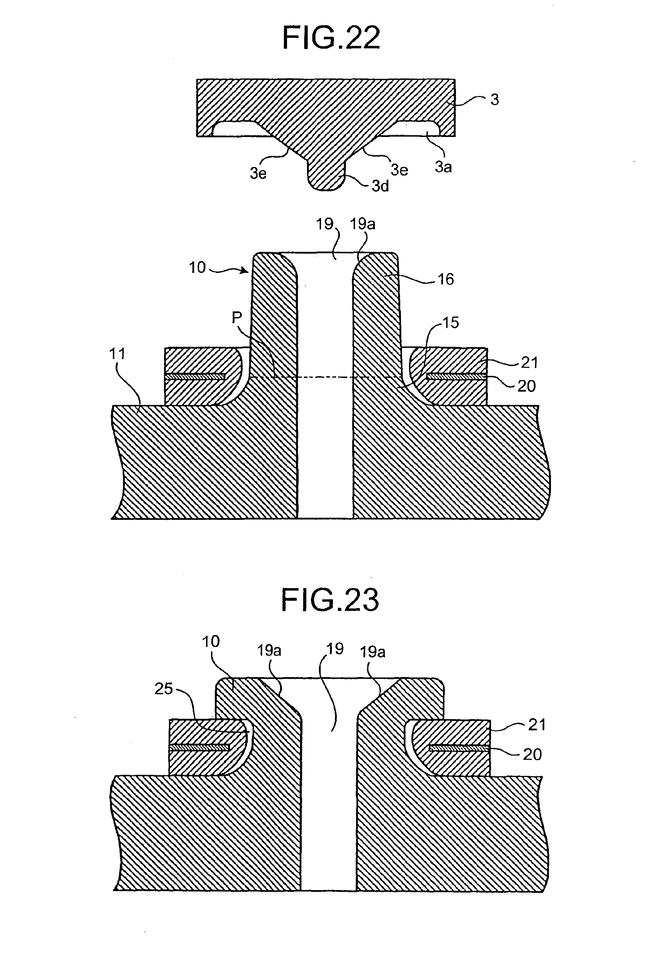

Fig. 22 is a longitudinal sectional view of the ultrasonic welding structure according to the ninth embodiment before welding, and Fig. 23 is a longitudinal sectional view of the ultrasonic welding structure according to the ninth embodiment after welding. As shown in Figs. 22 and 23, a notch 19a is formed on an entire circumference of the upper edge of the resonator acceptance unit 19 that is formed to penetrate the resin 10. Therefore, even if the horn 3 is erroneously positioned relative to the resin 10, then the protruding portion 3d of the horn 3 is guided inward of the resonator acceptance unit 19 by the notch 19a, and positioning error can be reduced. As long as the notch 19a fulfils this function, a shape of the notch 19a can be arbitrarily set.

### TENTH EMBODIMENT

An ultrasonic welding structure and an ultrasonic welding method according to the tenth embodiment of the present invention will be explained. The tenth embodiment, which is similar to the ninth embodiment, is generally characterized in that a protruding portion is formed to be generally semispherical. The structure and the method that are not specifically explained herein are the same as those according to the ninth embodiment. Like constituent elements are denoted by like reference symbols, respectively.

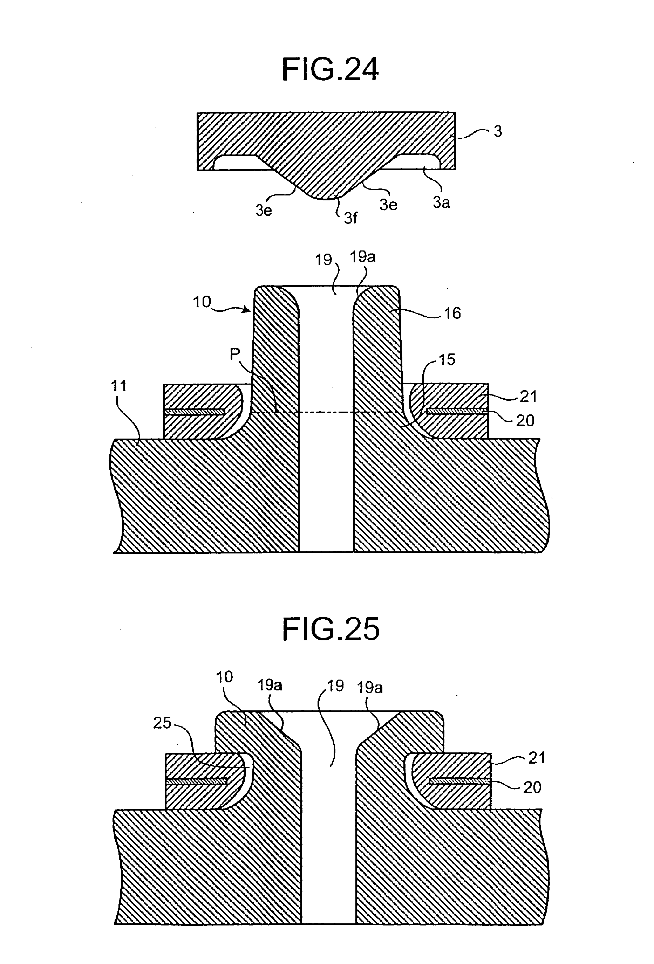

Fig. 24 is a longitudinal sectional view of the ultrasonic welding structure according to the tenth embodiment before welding, and Fig. 25 is a longitudinal sectional view of the ultrasonic welding structure according to the tenth embodiment after welding. As shown in Figs. 24 and 25, a protruding portion 3f is formed in the concave portion 3a of the horn 3. The protruding portion 3f includes a gentle conical peak continuous to the inclined surface from a proximal portion of the protruding portion 3f to downward thereof. Therefore, even if the horn 3 is erroneously positioned relative to the resin 10 in the horizontal direction, then any part of the wide peak of the protruding portion 3f of the horn 3 contacts with the resonator acceptance unit 19, and the peak is guided inward of the resonator acceptance unit 19 by the notch 19a. Positioning error can be thereby reduced. As long as the protruding portion 3f fulfils this function, a shape of the protruding portion 3f can be arbitrarily set.

The embodiments of the present invention have been explained so far. Specific configurations and methods according to the respective embodiments can be arbitrarily changed or modified within the scope of the technical concept of each invention set forth in claims. For instance, the specific numeric values explained or shown are approximate values and can be other numeric values.

### INDUSTRIAL APPLICABILITY

As explained so far, the ultrasonic welding structure and the ultrasonic welding method according to the present invention are useful for fusion-bonding the columnar heating target to the bonding target. The ultrasonic welding structure and the ultrasonic welding method according to the present invention are particularly suited for the ultrasonic welding structure and the ultrasonic welding method for improving durability of a welded portion by reducing occurrence of a void, a ridge or a crack in the welded portion.

## Claims

1. An ultrasonic welding structure for bonding a columnar heating target formed with a resin to a predetermined bonding target by pressing a resonator against the heating target and applying a high frequency vibration from the resonator to the heating target, wherein
the bonding target includes an insertion hole for inserting the heating target, and
the insertion hole of the bonding target includes a notch formed on an inner edge of the insertion hole on a side facing the resonator.

2. The ultrasonic welding structure according to claim 1, wherein
the notch of the insertion hole serves as an acceptance unit that accepts the heating target in a molten state.

3. The ultrasonic welding structure according to claim 1, wherein
the notch of the insertion hole serves as a stress relaxing unit that relaxes a stress generated within the bonding target due to a contact with the inner edge of the insertion hole.

4. An ultrasonic welding structure for bonding a columnar heating target formed with a resin to a predetermined bonding target by pressing a resonator against the heating target and applying a high frequency vibration from the resonator to the heating target, wherein
a surface of the resonator on which the resonator contacts with the heating target is formed in a substantially flat shape, and
the heating target includes a resonator connecting unit that is formed to protrude toward the resonator.

5. An ultrasonic welding structure for bonding a columnar heating target formed with a resin to a predetermined bonding target by pressing a resonator against the heating target and applying a high frequency vibration from the resonator to the heating target, wherein
the resonator includes a protruding portion that protrudes from a bottom of the resonator toward the heating target, and
the protruding portion of the resonator is formed in a substantially semispherical or conical shape.

6. An ultrasonic welding structure for bonding a columnar heating target formed with a resin to a predetermined bonding target by pressing a resonator against the heating target and applying a high frequency vibration from the resonator to the heating target, wherein
the resonator includes a protruding portion that protrudes from a bottom of the resonator toward the heating target, and
an inclined surface is formed on the resonator from the bottom of the resonator to a base of the protruding portion.

7. An ultrasonic welding structure for bonding a columnar heating target formed with a resin to a predetermined bonding target by pressing a resonator against the heating target and applying a high frequency vibration from the resonator to the heating target, wherein
the resonator includes a protruding portion that protrudes from a bottom of the resonator toward the heating target, and
the heating target includes a resonator acceptance unit formed at least in a concave shape with relative to the resonator.

8. The ultrasonic welding structure according to claim 7, wherein
the protruding portion of the resonator is formed in a substantially semispherical shape, and
the resonator acceptance unit of the heating target is formed in a substantially conical shape with a diameter large enough to include the protruding portion formed in the substantially semispherical shape.

9. The ultrasonic welding structure according to claim 7, wherein
the resonator acceptance unit is an elongated hole formed along a direction of pressing the resonator.

10. The ultrasonic welding structure according to claim 7, wherein
the resonator acceptance unit is a penetrating hole formed along a direction of pressing the resonator to reach a bottom of the heating target.

11. The ultrasonic welding structure according to any one of claims 7 to 10, wherein
a notch is provided in an upper edge of the resonator acceptance unit.

12. An ultrasonic welding structure for bonding a columnar heating target formed with a resin to a predetermined bonding target by pressing a resonator against the heating target and applying a high frequency vibration from the resonator to the heating target, wherein
the heating target includes
a large-diameter portion located on a side of a base of the heating target; and
a small-diameter portion located on a side of the resonator relative to the large-diameter portion, with a smaller diameter than a diameter of the large-diameter portion.

13. The ultrasonic welding structure according to claim 12, wherein
the bonding target includes an insertion hole for inserting the heating target, and
a boundary between the large-diameter portion and the small-diameter portion of the heating target is arranged downward of an upper surface of the bonding target in a state in which the heating target is inserted into the insertion hole.

14. An ultrasonic welding structure for bonding a columnar heating target formed with a resin to a predetermined bonding target by pressing a resonator against the heating target and applying a high frequency vibration from the resonator to the heating target, wherein
the resonator includes
a protruding portion that protrudes from a bottom of the resonator toward the heating target, the protruding portion being formed in a substantially semispherical or conical shape; and
an inclined surface formed from the bottom of the resonator to a base of the protruding portion, and
the heating target includes a resonator acceptance unit in a shape of a penetrating hole formed along a direction of pressing the resonator to reach a bottom of the heating target.

15. An ultrasonic welding method of bonding a columnar heating target formed with a resin to a predetermined bonding target by pressing a resonator against the heating target and applying a high frequency vibration from the resonator to the heating target, the ultrasonic welding method comprising:
preheating a contact portion of the resonator on which the resonator contacts with the heating target; and
heating including pressing the contact portion heated at the preheating against the heating target to apply a high frequency vibration to the heating target.
